## Europäisches Patentamt
## European Patent Office
## Office européen des brevets

(11) Veröffentlichungsnummer: **0 242 625**
**B1**

(12) **EUROPÄISCHE PATENTSCHRIFT**

(45) Veröffentlichungstag der Patentschrift: **27.12.90**

(21) Anmeldenummer: **87104439.2**

(22) Anmeldetag: **25.03.87**

(51) Int. Cl.⁵: **G 01 D 3/02**

(54) Messeinrichtung, die einer Messgrösse einen Messwert zuordnet und Messgeber dafür.

(30) Priorität: **25.04.86 DE 3614118**

(43) Veröffentlichungstag der Anmeldung:
**28.10.87 Patentblatt 87/44**

(45) Bekanntmachung des Hinweises auf die
Patenterteilung:
**27.12.90 Patentblatt 90/52**

(84) Benannte Vertragsstaaten:
**AT BE DE ES FR GB IT NL SE**

(56) Entgegenhaltungen:
**EP-A-0 078 592**
**EP-A-0 079 086**
**EP-A-0 124 045**
**WO-A-83/04435**
**GB-A-2 110 383**

(73) Patentinhaber: **Siemens Aktiengesellschaft**
**Wittelsbacherplatz 2**
**D-8000 München 2 (DE)**

(72) Erfinder: **Schreiber, Hans**
**Hoenighausen 1 c**
**D-8411 Lappersdorf (DE)**

Courier Press, Leamington Spa, England.

## Beschreibung

Die Erfindung betrifft eine Meßeinrichtung mit einem Meßgeber und einem nachgeschalteten Steuergerät gemäß Oberbegriff von Anspruch 1.

Eine bekannte Meßeinrichtung dieser Art ist in der EP 079 086 offenbart. Der Meßgeber stellt dabei eine Einheit aus dem Sensor und einem Codierspeicher dar, der charakteristische Daten für den Sensor enthält. Diese charakteristischen Daten sind z.B. die Werte für die Nullpunktverschiebung, das Temperaturverhalten etc. des Sensorsignals bezogen auf die Werte eines Normsensorsignals. Das an em Meßgeber angeschlossene Steuergerät fragt den Inhalt des Codierspeichers ab und korrigiert damit die von Sensor kommenden Sensorsignale. Dies geschieht durch über die gesamte Bandbreite des möglichen Sensorsignals lineare Veränderungen dieses Sensorsignals im Steuergerät (Einwirken auf Verstärkungsfaktoren oder "Offset" von Operationsverstärkern und Aufaddieren von Signalen).

Eine solche Meßeinrichtung ist für den Einsatz von Sensoren mit linearer Kennlinie gut geeignet. Bei Verwendung von Sensoren mit nichtlinearer Kennlinie ist es jedoch nicht mehr möglich, das Sensorsignal mit über dessen gesamte Bandbreite gelichen Korrekturwerten zu korrigieren.

Der Erfindung liegt daher die Aufgabe zugrunde, eine Meßeinrichtung gemäß Oberbegriff von Anspruch 1 derart auszubilden, daß insbesondere auch Sensoren mit nichtlinearer Kennlinie verwendet werden können.

Die erfindungsgemäße Lösung dieser Aufgabe ist in Anspruch 1 gekennzeichnet. Ein entsprechenden Meßgebar ist dem Anspruch 5 zu entuckmon.

Die Erfindung geht von der Überlegung aus, daß man für jede Art von Meßgeber eine Typkennlinie bestimmen kann, die alle Meßgeber desselben Typs prinzipiell kennzeichnet. Diese Typenkennlinie ist aus einer Mittelung von gemessenen Individualkennlinien gewonnen. Erfindungsgemäß ist diese Typkennlinie durch Typdaten definiert, die in einem Typspeicher des Steuergerätes abgelegt sind. Die Abweichungen der Individualkennlinie eines Meßgebers von der Typkennlinie sind durch diskrete Individualwerte bestimmt und dem Meßgeber in einem Codierspeicher beigegeben. Aus jedem Individualwert und der Typkennlinie bestimmt dann ein Rechner in dem Steuergerät einen Bezugspunkt auf der Individualkennlinie. Ein Meßprogramm im Programmspeicher des Rechners ermittelt anschließend ausgehend von diesen Bezugspunkten zu jedem Meßsignal den zugeordneten Meßwert.

Hierzu kann das Meßprogramm so ausgebildet sein, daß bei einem eintreffenden Meßwert zunächst festgestellt wird, zwischen welchen beiden Bezugspunkten der Individualkennlinie er liegt. Daraufhin wird der Meßwert durch eines der bekannten Interpolationsverfahren, z.B. durch lineare Interpolation zwischen den beiden Bezugspunkten, ermittelt.

Müssen die Meßwerte in einem sehr kurzen Abstand nacheinander geliefert werden, dann setzt das einen sehr schnellen Rechner voraus. Unter solchen Umständen kann es dann zweckmäßiger sein, ausgehend von den Individualwerten und der Typkennlinie mit einem Eichprogramm zunächst sämtliche möglichen Punktwertpaare der Individualkennlinie auszurechnen und diese derart in dem Arbeitsspeicher des Rechners abzulegen, daß aus ihm zu jedem Meßwert die zugehörige Meßgröße unmittelbar auslesbar ist.

Besondere Bedeutung hat die Erfindung bei Meßgebern mit nichtlinearer Kennlinie; sie ist jedoch mit Vorteil auch bei Meßgebern mit linearer Kennlinie einsetzbar: In diesem Fall kommt man beispielsweise mit zwei Individualwerten aus, von denen einer die axiale Verschiebung der Individualkennlinie gegenüber der Typkennlinie in Richtung der Abszisse oder Ordinate und der zweite Individualwert die Steigung der Individualkennlinie angibt.

Als Codierspeicher kommt jede Einrichtung in Frage, die einen oder mehrere Individualwerte derart codiert enthält, daß mindestens ein Individualwert vom Auswerter abfragbar und decodierbar ist. Ein einfaches Bespiel ist eine Anschlußklemmleiste, deren Klemmen teilweise isoliert, teilweise geerdet sind, so daß der angeschlossene Auswerter durch eine Widerstandsmessung über die einzelnen Klemmen eine Dualzahl ermitteln kann. Als analoge Speicher für den Codierspeicher kommen elektrische Bauteile, wie z.B. Kondensatoren, Widerstände etc. in Frage, die von Auswerter elektrisch abfragbar sind.

Bei einer Ausführungsform der Erfindung ist die Typkennlinie als eine mathematische Kennfunktion im Typspeicher abgelegt, die mit m Parametern die Typkennlinie des Meßgebers definiert. Der Auswerter ersetzt die m Parameter dieser Kennfunktion durch die m Individualwerte aus dem Codierspeicher des Meßgebers, die so gewählt sind, daß damit die Kennfunktion der Individualkennlinie des Meßgebers entsteht.

Bei einer zweiten Ausführungsform der Erfindung enthält der Typspeicher die Typkennlinie in Form diskreter Punktwertpaare und der Codierspeicher die Abweichungen der Individualkennlinie von der Typkennlinie in m Stützpunkten.

Ein solches Ausführungsbeispiel der Erfindung wird anhand der Figuren nährer erläutert. Dabei zeigen:

FIG. 1 eine Meßeinrichtung für eine Luftmengenmessung im Ansaugrohr einer Brennkraftmaschine und

FIG 2 den Verlauf der zugehörigen Typ- und Individualkennlinie.

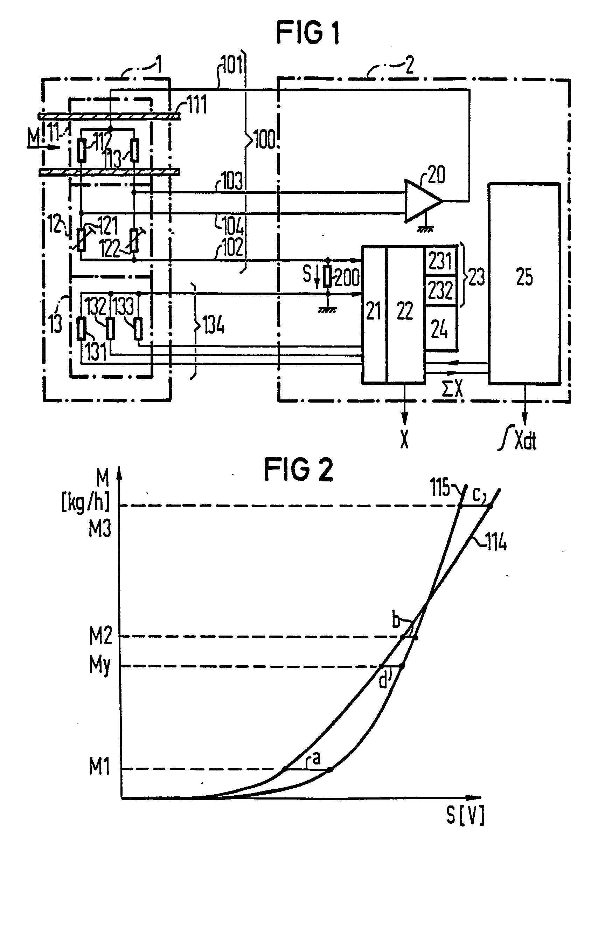

Die in FIG 1 gezeigte Meßeinrichtung besteht aus einem Meßgeber 1, der als thermisch arbeitender Luftmassenmesser ausgebildet und im heißen Umfeld der Brennkraftmaschine, nämlich am Ansaugrohr 111 angeordnet ist. Der Meßgeber 1 enthält einen Sensor 11 mit einem Meßwiderstand 112 und einem Heizwiderstand 113, eine Einstelleinrichtung 12 mit Einstellwiderständen 121, 122 sowie einen Codierspeicher 13 mit Codierwiderständen 131, 132 und 133.

Der Meßwiderstand 112 und der Heizwiderstand 113 sind als Platindünnfilmwiderstand ausgebildet; sie sind in dem Ansaugrohr 111 der Brennkraftmaschine untergebracht.

Der Meßwiderstand 112 ist über einen inneren Verbindungspunkt mit einem Einstellwiderstand 121 in Serie geschaltet und bildet einen ersten relativ hochohmigen Brückenzweig; entsprechend sind der Heizwiderstand 113 und der andere Einstellwiderstand 122 an einem inneren Verbindugspunkt verbunden und bilden einen zweiten Brückenzweig. Diese Brückenzweige liegen parallel zwischen einer Anschlußleitung 101 und einer Rückleitung 102; die inneren Verbindungspunkte der Brückenzweige sind an Ausgangsleitungen 103, 104 angeschlossen. Diese Ausgangsleitungen bilden zusammen mit der Anschlußleitung 101 und der Rückleitung 102 einen Steuergerätanschluß 100.

Die drei ohmschen Codierwiderstände des Codierspeichers 13 sind an einem Ende mit einer Bezugsleitung 130 verbunden und führen am anderen Ende zu drei Codierleitungen; letztere bilden zusammen mit der Bezugsleitung einen Speicheranschluß 134.

Das Steuergerät 2 enthält einen Regelverstärker 20, einen Abschlußwiderstand 200 sowie einen Rechner.

Die beiden Eingänge des Regelverstärkers sind an die Ausgangsleitungen 103, 104 des Steuergeräteanschlusses 100 angeschlossen; sein Ausgang ist mit der Anschlußleitung 101 verbunden. Die Rückleitung 102 ist über den Abschlußwiderstand 200 gegen Masse geführt. Auf diese Weise entsteht ein bekannter Regelkreis, durch den die Temperaturdifferenz zwischen den Temperaturen des meßwiderstandes 112 und des Heizwiderstandes 113 unabhängig von der durchströmenden Luftmasse auf einem konstanten Wert gehalten wird, in dem der Regelverstärker 20 seinen Ausgangsstrom über die Widerstände 113, 122 und 200 entsprechend ändert. Dieser Strom erzeugt an dem Abschlußwiderstand 200 einen Spannungsabfall, der das Meßsignal S darstellt, dessen Große von der Meßgröße M gemäß Individualkennlinie 114 (FIG 2) abhängig ist.

Der Rechner im Steuergerät 2 enthält einen Mikroprozessor 22 und einen Masterprozessor 25. Dem Mikroprozessor 22 sind eingangsseitig Analogdigitalwandler 21 vorgeschaltet. Außerdem ist ihm ein Arbeitsspeicher 24 in Form eines RAM sowie ein Typspeicher 231 und ein Programmspeicher 232, die zusammen genommen durch ein ROM 23 gebildet sind, zugeordnet. Die Analogdigitalwandler 21 haben eine Auflösung von 8 Bit und können dementsprechend 256 Digitalwerte liefern; einer davon erhält eingangsseitig das Meßsignal S in Form einer Spannung.

In FIG 2 ist die Individualkennlinie 114 und die Typkennlinie 115 des Meßgebers 1 dargestellt, wobei das Meßsignal S als Spannung in Abhängigkeit von der Meßgröße M in Form des Luftmassenstroms aufgetragen ist.

Die Typkennlinie 115 besteht aus 256 Punkten, von denen jeder duch ein Punktwertpaar (Luftmassenstrom M und Spannung S) bestimmt ist. Die Typkennlinie wird z.B. wie folgt ermittelt: Die Messung der Spannung S von z verschiedenen Meßgebern 1 bei demselben, durch ein Meßnormal bestimmten Luftmassenstrom M ergibt z Spannungswerte. Der Mittelwert oder der Maximalwert der Gaußverteilung aus diesen z Spannungswerten und der Wert des Meßnormals des Luftmassenstromes M bilden ein Stützpunktwertpaar der Typkennlinie 115. Diese Verfahren wird mit insgesamt y unterschiedlichen Meßnormalen durchgeführt, deren Größen so gewählt sind, daß die — auf der Ordinate in FIG 2 aufgetragen — äquidistante Punkte markieren. Somit ergeben sich z Stützpunktwertpaare der Typkennlinie 115. Die restlichen Punktwertpaare der 256 Punkte der Typkennlinie 115 berechnet ein Prozeßrechner durch bekannte Extrapolation derart, daß die erste und zweite Ableitung der Typkennlinie 115 in jedem Punkt jeweils gleich sind. Alle 256 Punktwertpaare der Typkennlinie 115 werden im Typspeicher 231, also in ROM 23, abgelegt.

Die Individualkennlinie 114 des Meßgebers 1 besteht ebenfalls aus 256 Punktwertpaaren. Davon werden aber nach der Fertigung des Meßgebers nur drei Punktwertpaare — im folgenden Bezugswertpaare genannt — in drei Bezugspunkten ebenso ermittelt wie die Stützpunktwertpaare der Typkennlinie 115. Die Abweichung der Spannung S der Meßgebers 1 von der Spannung S der Typkennlinie 115 bei jeweils identischem Luftmassenstrom (M1 bis M3) ist mit a, b, c gekennzichnet. Diese Beträge sind die Individualwerte des Meßgebers 1 und sind durch entsprechende Einstellung der Werte der Codierwiderstände 131, 132, 133 im Codierspeicher 13 eingespeichert.

Ein Vorzeichen gibt an, nach welcher Seite die Individualkennlinie 114 von der Typkennlinie 115 abweicht. Eine Abweichung nach niedrigeren Spannungswerten hin (Fälle a, b) hat z.B. negatives Vorzeichen und eine Abweichung nach höheren Spannungswerten (c) positives Vorzeichen. Die Information über das Vorzeichen ist in den Codierwiderständen 131, 132, 133 z.B. in einer zusätzlichen Stelle enthalten, die durch die vorkommenden Individualwerte nicht belegt ist: Gehen die Individualwerte z.B. von 1 bis 50, so bedeutet die Zahl 43 den Wert +43; der Wert −43 wird durch die Zahl 143 dargestellt.

Zur Bestimmung der vollständigen Individualkennlinie, z.B. bei der ersten Inbetriebnahme der Meßeinrichtung 1, ermittelt der Mikroprozessor 22 mit dem Eichprogramm im Programmspeicher 232 über den Abfrageausgang 134 durch Widerstandmessung die Größe der Codierwiderstände 131, 132, 133. Mit diesen drei Größen, den Individualwerten a, b, c werden die drei Bezugspunkte der Individualkennlinie 114 mit ihren Bezugswertpaaren berechnet und im RAM 24 abgespeichert. Davon ausgehend berechnet der Mikroprozessor 22 die restlichen Punktwertpaare der Individualkennlinie 114 durch lineare Näherung, indem zu jedem Punktwertpaar der Typkennlinie 115 der Abweichwert (d in Figur 2) bei demselben Luftmassenstrom (My) nach der Formel

$$d = a - (a - b) \frac{My - M1}{M2 - M1}$$

berechnet wird. Dabei bedeuten M1 und M2 die Werte der Meßgröße in den beiden benachbarten Bezugspunkten. Alle so ermittelten 256 Punktwertpaare der Individualkennlinie 114 legt der Mikroprozessor 22 im RAM 24 derart ab, daß jedem auftretenden Spannungswert des Meßsignals S des Meßgebers 1 die Adresse der Speicherzelle mit dem jeweils zugehörigen Luftmassenstrom M zugeordnet ist.

Die Berechnung der Individualkennlinie 114 erfordert mehrere Sekunden; sie wird daher nur bei Bedarf, also bei der ersten Inbetriebnahme und später nur nach Austausch des Luftmassenmessers oder nach Ausfall der Betriebsspannung (da dann der Inhalt des RAM 24 verloren ist) durchgeführt.

Der Mikroprozessor 22 mißt deshalb bei jedem Start der Brennkraftmaschine die Größe der Codierwiderstände 131, 132, 133. Falls deren Größe im Vergleich zu der bei der Erstinbetriebnahme abgespeicherten Größe gleich geblieben ist, d.h. noch derselbe Meßgeber 1 angeschlossen ist, behält der Mikroprozessor 22 die im RAM 24 enthaltene Individualkennlinie 114 bei.

Im Meßbetrieb, gesteuert durch ein im ROM 23 abgelegtes Meßprogramm, macht er Analogdigitalwandler 21 aus der an seinem Eingang liegenden Spannung S des Meßgebers 1 Digitalwerte. Der Mikroprozessor 22 adressiert mit diesen Digitalwerten direkt die Speicherzellen mit den Digitalwerten des Luftmassenstroms M im RAM 24 und liest diese Digitalwerte (= Meßwert X) aus.

Meist ist nicht der Luftmassenstrom M, sondern dessen Zeitintegral über ein Integrierintervall gefordert, das sich über einen vorgegebenen Abschnitt oder die ganze Dauer eines Ansaugtaktes der Brennkraftmaschine erstreckt. Im Meßprogramm ist deshalb vorgesehen, daß der Mikroprozessor 22 aus den während des Integrationsintervalles eintreffenden Digitalwerten des Luftmassenstroms M einen Summenwert bildet.

Die Berechnung des Zeitintegrals des Luftmassenstroms M über das Integrationsintervall wird durch den Masterprozessor 25 gesteuert. Er gibt zunächst den Start- und Stopbefehl zur Bildung des Summenwerts an den Mikroprozessor 22. Bei jedem Startbefehl wird der Summenwert auf Null gesetzt und das Aufsummieren angestoßen. Der Stopbefehl fragt den Summenwert und die Zahl der ausgeführten Summationen ab. Der Masterprozessor 25 dividiert diesen Summenwert durch die Zahl der erfolgten Summationen und multipliziert mit der Zeit, die einem Integrations-intervall entspricht. Dami ergibt sich die Luftmasse je Integrationsintervall.

Der Mikroprozessor 22 ist demnach von der Steuerung der Integration entlastet. Diese Aufgabenteilung gestattet es, einen einfachen Standardprozessor einzusetzen, der sonst bei hohen Drehzahlen der Brennkraftmaschine überfordert wäre.

Der Masterprozessor 25 stellt keinen zusätzlichen Aufwand dar, da er, bedingt durch hier nicht angesprochene Zusatzaufgaben, sowieso vorhanden ist. Ein weiterer Vorteil der vorgeschlagenen Meßeinrichtung ist, daß die Berechnung des Zeitintegrals des Luftmasenstroms ohne die Verwendung sonst üblicher Linearisierungseinrichtungen mit hoher Genauigkeit möglich ist. Bei der erfindungsgemäßen Lösung wird nämlich die Meßgröße M direkt integriet und nicht das elektrische Sensorsignal S. Das Problem der Nichtproportionalität des Integrals der Meßgröße M und des Integrals des Meßsignals S tritt deshalb nicht auf.

Von den beiden Komponenten der Meßeinrichtung ist der Meßgeber 1 am stärksten beansprucht. Ein eventuell erforderlicher Austausch gegen einen neuen Meßgeber desselben Typs kann jederzeit an beliebigem Ort durchgeführt werden ohne daß irgendeine Anpassung an das noch funktionierende Steuergerät erforderlich wäre.

**Patentansprüche**

1. Meßeinrichtung, die einer Meßgröße (M) einen Meßwert (X) zuordnet, mit einem Meßgeber (1) mit einer Individualkennlinie (114), der einen Sensor (11) für die Meßgröße (M) enthält und der abhängig von der Meßgröße (M) ein elektrisches Meßsignal (S) liefert und

der einen Codierspeicher aufweist, der charakteristische Daten des Sensors (11) enthält mit einem an den Meßgeber (1) angeschlossenen Steuergerät (2),

das die charakteristischen Daten abfragt und damit den Meßwert (X) korrigiert, dadurch gekennzeichnet

daß das Steuergerät (2) einen Rechner mit Prozessor, Analogdigitalwandler (21) und Speicher enthält,

daß der Speicher einen Typspeicher (231) enthält, in dem Typdaten abgelegt sind, durch die eine Typkennlinie (115) des Meßgebers (1) definiert ist, die aus einer Mittelung von gemessenen Individualkennlinien gewonnen ist,

daß die charakteristischen Daten Individualwerte des Meßgebers (1) sind, durch die die Abweichung der Individualkennlinie (114) des Meßgebers (1) von der Typkennlinie (115) bestimmt ist, und

daß der Speicher einen Programmspeicher (232) mit einem Meßprogramm enthält, mit dessen Hilfe der Prozessor zu jedem Meßsignal (S) den zugeordneten Meßwert (X) der Meßgröße (M) aus der Typkennlinie und den Individualwerten des Meßgebers (1) ermittelt.

2. Meßeinrichtung nach Anspruch 1, dadurch gekennzeichnet, daß der Typspeicher (231) die Typkennlinie (115) in Form diskreter Punktwertpaare enthält und daß jeder der m Individualwerte im Codierspeicher (13) die Abweichung eines Bezugspunktes der Individualkennlinie (114) von einem zugeordneten Punktwertpaar — Stützpunkt — der Typkennlinie (115) angibt.

3. Meßeinrichtung nach Anspruch 1, dadurch gekennzeichnet, daß der Typspeicher (231) die Typkennlinie (115) in Form einer Kennfunktion mit m Parametern enthält und daß die die Individualkennlinie (114) des Meßgebers bestimmenden Parameter die m Individualwerte in dem Codierspeicher (13) sind.

4. Meßeinrichtung nach Anspruch 2 oder 3, dadurch gekennzeichnet, daß der Programmspeicher (232) im Steuergerät (2) ein Eichprogramm enthält, mit dessen Hilfe der Prozessor die Inhalte des Typspeichers (231) und des Codierspeichers (13) abfragt und daraus die Individualkennlinie (114) des Meßgebers (1) errechnet und diese in einem Arbeitsspeicher (24) derart ablegt, daß der zu einem Meßsignal (S) gehörende Meßwert (X) unter einer dem Meßsignal (S) zugeordneten Adresse abgelegt ist, und daß der Prozessor mit Hilfe des Meßprogrammes zu jedem Meßsignal (S) den zugeordneten Meßwert (X) der Meßgröße (M) aus dem Arbeitsspeicher (24) ausliest.

5. Meßgeber (1) mit einem Sensor (11), der ein elektrisches Meßsignal (S) liefert, das von einer Meßgröße (M) abhängt und dessen Größe durch die Individualkennlinie (114) des Meßgebers (1) bestimmt ist, mit einem permanenten Codierspeicher (13) mit einem Abfrageanschluß (134) und einem Steuergerätanschluß (100), dadurch gekennzeichnet, daß in dem Codierspeicher (13) Individualwerte abgelegt sind, durch die die Abweichung der Individualkennlinie des Meßgebers (1) von der alle Meßgeber gleichen Typs kennzeichnenden Typkennlinie bestimmt ist, die aus einer Mittelung von gemessenen Individualkennlinien gewonnen ist.

6. Meßgeber (1) nach Anspruch 5, dadurch gekennzeichnet, daß der Codierspeicher (13) aus Codierbauteilen, insbesondere ohmschen Widerständen (131 bis 133), besteht.

7. Meßgeber (1) nach Anspruch 5 oder 6, dadurch gekennzeichnet, daß er ausschließlich passive Bauelemente enthält.

**Revendications**

1. Dispositif de mesure, qui associe une valeur de mesure (X) à une grandeur de mesure (M), comportant un capteur de mesure (1), qui possède une courbe caractéristique individuelle (114), contient un senseur (11) pour la grandeur de mesure (M) et fournit un signal électrique de mesure (S) en fonction de la grandeur de mesure (M), et

qui comporte un mémoire de codage, qui contient les donnés caractéristique du senseur (11),

et comportant un appareil de commande (2), qui est raccordé au capteur de mesure (1), et

qui interroge les données caractéristiques et corrige par conséquent la valeur de mesure (X), caractérisé par le fait

que l'appareil de mesure (2) contient un ordinateur équipé d'un processeur, d'un convertisseur analogique/numérique (21) et une mémoire,

que la mémoire contient un mémoire de types (231), dans laquelle sont mémorisées des données de types qui définissent une courbe caractéristique de type (15) du capteur de mesure (1), qui est obtenue à partir d'une moyenne de courbes caractéristiques usuelles mesurées,

que les données caractéristiques sont des valeurs individuelles de l'appareil du capteur de mesure (1), au moyen duquel est déterminé l'écart entre la courbe caractéristique individuelle (114) du capteur de mesure (1) et la courbe caractéristique de type (115), et

que la mémoire contient une mémoire de programme (232) comportant un programme de mesure, à l'aide duquel le processeur détermine, pour chaque signal de mesure (S), la valeur de mesure (X) associée à la grandeur de mesure (M), à partir de la courbe caractéristique de ce type et des valeurs individuelles du capteur de mesure (1).

2. Dispositif de mesure suivant la revendication 1, caractérisé par le fait que la mémoire de types (231) contient la courbe caractéristique de type (115) sous la forme de couples discrets de valeurs actuelles, et que chacune des m valeurs individuelles situées dans la mémoire de codage (13) indique l'écart entre un point de référence de la courbe caractéristique individuelle (114) et un couple associé de valeurs poncutelles — point de support — de la courbe caractéristique de type (115).

3. Dispositif de mesure suivant la revendication 1, caractérisé par le fait que la mémoire de types (231) contient la courbe caractéristique de type (115) sous la forme d'une fonction caractéristique comportant m paramètres et que les paramètres, qui déterminent la courbe caractéristique individuelle (144) du capteur de mesure, sont les m valeurs individuelles situées dans la mémoire de codage (13).

4. Dispositif de mesure suivant la revendication 2 ou 3, caractérisé par le fait que la mémoire de programmes (232) située dans l'appareil de commande (2) contient un programme d'étalonnage, à l'aide duquel le processeur interroge les contenus de la mémoire de types (231) et de la mémoire de codages (13) et calcule, à partir de là, la courbe caractéristique individuelle (114) du capteur de mesure (1) et mémorise cette dernière dans une mémoire de travail (24) de telle sorte que la valeur de mesure (X) associée au signal de mesure (S) est mémorisée à une adresse associée au signal de mesure (S), et que le processeur lit, à l'aide du programme de mémoire, et pour chaque signal de mesure (S), la valeur de mesure (X) associée à la grandeur de mesure (M) à partir de la mémoire de travail (24).

5. Capteur de mesure (1) comportant un capteur (11), qui fournit un signal électrique de mesure (S) qui dépend d'une grandeur de mesure (M) et dont la valeur est déterminée par la courbe caractéristique individuelle (114) du capteur de mesure (1), une mémoire de codage permanente (13) comportant une borne d'interrogation (134) et une borne (100) de l'appareil de commande, caractérisé en ce que dans la mémoire de codage (13) sont mémorisées des valeurs individuelles, au moyen desquelles est déterminé l'écart entre la courbe caractéristique individuelle du capteur de mesure (1) et la courbe caractéristique de type caractérisant tous les capteurs de mesure du même type et obtenue à partir d'une formation de la moyenne de courbes caractéristiques individuelles mesurées.

6. Capteur de mesure (1) suivant la revendication 5, caractérisé par le fait que la mémoire de codage (13) est constituée par des composants de codage, notamment des résistances ohmiques (131 à 133).

7. Capteur de mesure (1) suivant la revendication 5 ou 6, caractérisé par le fait qu'il contient exclusivement des composants passifs.

**Claims**

1. Measuring device assigning a measured value (X) to a measured unit (M), having a measuring probe (1) with an individual characteristic (114), which measuring probe contains a sensor (11) for the measured unit (M), supplies an electrical measurement signal (S) as a function of the measured unit (M), and has a coding memory containing characteristic data of the sensor (11), and having a control device (2) which is connected to the measuring probe (1) and interrogates the characteristic data, and hence corrects the measured value (X), characterized in that

the control device (2) contains a computer with processor, analog-digital converter (21) and memory, the memory contains a type memory (231) in which type data defining a type characteristic (115) of the measuring probe (1) are stored, which type characteristic is obtained from averaging measured individual characteristics,

the characteristic data are individual values of the measuring probe (1) by means of which the deviation of the individual characteristic (114) of the measuring probe (1) from the type characteristic (115) is determined, and

the memory contains a program memory (232) with a measurement program, with the aid of which the processor determines for each measurement signal (S) the associated measured value (X) of the measured unit (M) from the type characteristic and the individual values of the measuring probe (1).

2. Measuring device according to Claim 1, characterized in that the type memory (231) contains the type characteristic (115) in the form of discrete point value pairs, and in that each of the m individual values in the coding memory (13) indicates the deviation of a reference point of the individual characteristic (114) from an associated point value pair — interpolation point — of the type characteristics (115).

3. Measuring device according to Claim 1, characterized in that the type memory (231) contains the type characteristic (115) in the form of characteristic function with m parameters, and in that the parameters determining the individual values in the coding memory (13).

4. Measuring device according to Claim 2 or 3, characterized in that the program memory (232) in the control device (2) contains a calibration program, with the aid of which the processor interrogates the contents of the type memory (231) and the coding memory (13), and calculates therefrom the individual characteristic (114) of the measuring probe (1) and stores this in a working memory (24) in such a way that the measured value (X) belonging to a measurement signal (S) is stored at an address assigned to the measurement signal (S), and in that, with the aid of the measurement program, the processor reads out the associated measured value (X) of the measured unit (M) from the working memory (24) for each measurement signal (S).

5. Measuring probe (1) having a sensor (11) supplying an electrical measurement signal (S) which depends on a measured unit (M) and the magnitude of which is determined by the individual characteristic (114) of the measuring probe (1), having a permanent coding memory (13) with an interrogation terminal (134) and a control device terminal (100), characterized in that individual values are stored in the coding memory (13), by means of which individual values the deviation of the individual characteristic of the measuring probe (1) from the type characteristic characterizing all measuring probes of the same type is determined, which type characteristic is obtained from averaging measured individual characteristics.

6. Measuring probe (1) according to Claim 5, characterized in that the coding memory (13) consists of coding components, in particular ohmic resistors (131 to 133).

7. Measuring probe (1) according to Claim 5 or 6, characterized in that it contains exclusively passive components.

# FIG 1

# FIG 2